# EUROPÄISCHE PATENTANMELDUNG

(11) **EP 4 349 671 A1**
(43) Veröffentlichungstag der Anmeldung: **10.04.2024**
(21) Anmeldenummer: 23195869.5
(22) Anmeldetag: 07.09.2023
(51) Int. Cl.: B60T 8/172, B60T 8/1763, B60T 7/12, B60T 13/74

(54) **VERFAHREN ZUM BETRIEB EINES KRAFTFAHRZEUGS**

(30) Priorität: 06.10.2022 DE 102022125801
(71) Anmelder: AUDI AG, 85057 Ingolstadt (DE)
(72) Erfinder: Förster, Kilian, 92339 Beilngries (DE)

(57) **Zusammenfassung**

Die Erfindung betrifft ein Verfahren (36) zum Betrieb eines Kraftfahrzeugs (2), das zwei Räder (4) aufweist, denen jeweils eine Parkbremse (16) zugeordnet ist. Die Parkbremsen (16) werden in Abhängigkeit einer Reibung zwischen dem jeweiligen Rad (4) und dem Boden (8) angesteuert. Ferner betrifft die Erfindung ein Kraftfahrzeug (2).

## Beschreibung

Die Erfindung betrifft ein Verfahren zum Betrieb eines Kraftfahrzeugs sowie ein Kraftfahrzeug.

Kraftfahrzeuge, wie Personenkraftwagen, weisen üblicherweise eine Parkbremse auf, mittels derer das Kraftfahrzeug, sofern dieses geparkt ist, gegen ein ungewolltes Bewegen gesichert wird. In zunehmendem Maße sind derartige Parkbremsen elektrisch ausgestaltet und werden beispielsweise bei Verriegeln des Kraftfahrzeugs von außen oder bei einem Umschalten eines Betriebsmodus aktiviert. Die Parkbremse weist üblicherweise eine Bremsscheibe auf, die drehfest an einem zugeordneten Rad angebunden ist. Ferner weist die Parkbremse eine oder mehrere Bremsbacken auf, die karosserieseitig festgehalten sind, und die im aktivierten Zustand die Bremsscheibe fixieren.

Die Parkbremse wird dabei nicht zum Verzögern des Kraftfahrzeugs verwendet, weswegen die damit aufgebrachten Kräfte vergleichsweise gering sind. Aus diesem Grund sind meist die Bestandteile der Parkbremse vergleichsweise filigran ausgestaltet, was zu einer Reduzierung der Kosten und des Gewichts führt. Üblicherweise ist zwei unterschiedlichen Rädern des Kraftfahrzeugs jeweils eine derartige Parkbremse zugeordnet, sodass eine Redundanz gegeben ist.

Bei Betrieb ist es möglich, dass aufgrund von Umweltbedingungen, wie beispielsweise einer erhöhten Luftfeuchtigkeit, ein Reibkoeffizient zwischen der Bremsscheibe und den Bremsklötzen jeder Parkbremse verringert ist. Da jedoch die zum Verhindern des Bewegens des Kraftfahrzeugs erforderliche Kraft auf die beiden Parkbremsen aufgeteilt wird, wird dennoch eine Bewegung des Kraftfahrzeugs verhindert. Falls jedoch eines der Räder, denen eine der Parkbremsen zugeordnet ist, auf einem vergleichsweise rutschigen Untergrund aufsteht, kann die zum Verhindern des Bewegens des Kraftfahrzeugs erforderliche Kraft lediglich mittels der anderen Parkbremse aufgebracht werden, was dann nicht ausreichend ist.

Zur Vermeidung hiervon werden beispielsweise stets die Bremsklötze mit maximaler Kraft gegen die jeweilige Bremsscheibe verbracht, was zu einem erhöhten Verschleiß führt. Somit ist eine vergleichsweise robuste Konstruktion erforderlich, obwohl in den meisten Anwendungsfällen die aufgebrachten Kräfte zur Sicherung des Kraftfahrzeugs nicht benötigt werden.

Der Erfindung liegt die Aufgabe zugrunde, ein besonders geeignetes Verfahren zum Betrieb eines Kraftfahrzeugs als auch ein besonders geeignetes Kraftfahrzeug anzugeben, wobei vorteilhafterweise eine Sicherheit erhöht und/oder Herstellungskosten reduziert sind.

Hinsichtlich des Verfahrens wird diese Aufgabe durch die Merkmale des Anspruchs 1 und hinsichtlich des Kraftfahrzeugs durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb eines Kraftfahrzeugs. Das Kraftfahrzeug ist hierbei landgebunden und vorzugsweise unabhängig von Schienen oder dergleichen bewegbar und somit nicht schienengeführt. Das Kraftfahrzeug umfasst zumindest zwei Rädern, mittels derer ein Kontakt zu einem Boden, insbesondere einer Fahrspur, erfolgt. Zweckmäßigerweise weist jedes Rad eine Felge auf, die von einem Reifen des Rads umgeben ist. Insbesondere ist der Reifen aus einem Gummi oder Kautschuk erstellt. Zweckmäßigerweise umfasst das Kraftfahrzeug genau vier derartige Räder. Das Kraftfahrzeug ist zweckmäßigerweise ein Nutzkraftwagen, wie ein Lastkraftwagen (Lkw) oder ein Bus. Besonders bevorzugt jedoch ist das Kraftfahrzeug ein Personenkraftwagen (Pkw).

Das Kraftfahrzeug umfasst zweckmäßigerweise einen Antrieb, der beispielsweise ein Verbrennungsmotor, einen Elektromotor oder eine Kombination daraus umfasst. Hierbei ist der Antrieb zweckmäßigerweise in Wirkverbindung mit zumindest einem der Räder. Besonders bevorzugt weist das Kraftfahrzeug ein Lenksystem auf, das in Wirkverbindung mit zumindest einem der Räder ist. Hierbei ist es möglich, mittels Betätigung des Lenksystems eine Fortbewegungsrichtung des Kraftfahrzeugs einzustellen. Bei Betätigung des Lenksystems werden geeigneterweise die Räder, die in Wirkverbindung mit dem Lenksystem sind, bezüglich einer etwaigen Karosserie des Kraftfahrzeugs verschwenkt.

Ferner umfasst das Kraftfahrzeug zumindest zwei Parkbremsen, die den unterschiedlichen Rädern zugeordnet sind. Mit anderen Worten ist jedem der beiden Räder jeweils eine der Parkbremsen zugeordnet. Sofern das Kraftfahrzeug beispielsweise mehrere Räder aufweist, ist zum Beispiel jedem der Räder eine derartige Parkbremse zugeordnet, und der Anzahl der Parkbremsen entspricht der Anzahl der Räder. Besonders bevorzugt jedoch sind auch bei mehreren Rädern lediglich zwei Parkbremsen vorhanden.

Die Parkbremsen dienen dabei dem Halten des jeweils zugeordneten Rads in der jeweiligen Position, sodass mittels der Parkbremsen eine Rotation des jeweils zugeordneten Rads unterbunden wird. Insbesondere weist jede Parkbremse ein erstes Bauteil auf, das drehfest an dem jeweils zugeordneten Rad angebunden ist, beispielsweise direkt oder vorzugsweise über weitere Bestandteile. Somit wird bei einer Rotation des jeweiligen Rads das erste Bauteil mit dem jeweiligen Rad mitrotiert. Ferner umfasst jede Parkbremse ein zweites Bauteil, das zweckmäßigerweise karosserieseitig festgehalten ist. Mittels des zweiten Bauteils ist es hierbei möglich, das erste Bauteil in einer Position zu halten und somit eine Rotation des ersten Bauteils und daher auch das jeweils zugeordneten Rads bezüglich der Karosserie zu verhindern. Zum Verhindern der Rotation wechselwirken die beiden Bauteile insbesondere lediglich kraftschlüssig, jedoch nicht formschlüssig. Mit anderen Worten ist insbesondere keine Verklinkung, oder dergleichen vorhanden. Zweckmäßigerweise ist jede Parkbremse als Scheibenbremse oder Trommelbremse ausgestaltet.

Das Verfahren sieht vor, dass die Parkbremsen in Abhängigkeit einer Reibung zwischen dem jeweiligen Rad und dem Boden angesteuert werden. Insbesondere wird erfolgt hierbei das Durchführen des Verfahrens, wenn das Kraftfahrzeug abgestellt wird, also insbesondere geparkt wird. Mit anderen Worten werden die Parkbremsen lediglich dann angesteuert, sodass mittels dieser eine Rotation des jeweils zugeordneten Rads unterbunden oder zumindest erschwert wird, wenn ein Bewegen des Kraftfahrzeugs nicht erfolgen und insbesondere das Kraftfahrzeug sicher abgestellt werden soll. Beispielsweise erfolgt die Aktivierung der Parkbremsen, also das Ansteuern, wenn das Kraftfahrzeug von außen verriegelt wird, oder wenn ein bestimmter Betriebsmodus aktiviert wird, bei dem beispielsweise der etwaige Antrieb von den zugeordneten Rädern entkoppelt wird.

Zusammenfassend wird bei dem Verfahren somit insbesondere zunächst die Reibung zwischen jedem der Räder, denen eine der Parkbremsen zugeordnet ist, und dem jeweiligen Boden ermittelt, auf dem das jeweilige Rad aufsteht. Hierbei wird beispielsweise die Haftreibung direkt ermittelt oder zumindest ein hierzu korrespondierender Wert. Insbesondere wird hierfür ein Reibkoeffizient verwendet oder zumindest ein Wert, der in funktionellem Zusammenhang mit dem Reibkoeffizient steht. Alternativ oder in Kombination hierzu wird beim Ermitteln der Reibung ein aktuelles Gewicht des Kraftfahrzeugs berücksichtigt.

Da die mechanischen Eigenschaften des jeweiligen Rads im Wesentlichen konstant sind, erfolgt somit eine Ansteuerung der Parkbremsen insbesondere in Abhängigkeit der Beschaffenheit des jeweiligen Untergrunds und/oder eines Gewichts des Kraftfahrzeugs. Somit wird insbesondere die Beschaffenheit des Untergrunds berücksichtigt, und ob es sich hierbei um einen vergleichsweise griffigen oder rutschigen Untergrund handelt. Somit ist es ermöglicht, auch bei einem vergleichsweise rutschigen Untergrund die Parkbremsen derart anzusteuern, dass ein ungewolltes Bewegen des Kraftfahrzeugs nach einem Abstellen unterbleibt, sodass eine Sicherheit erhöht ist. Dahingegen wird vorzugsweise bei einem vergleichsweise griffigen Untergrund eine vergleichsweise unbelastende Ansteuerung der Parkbremsen gewählt, sodass ein übermäßiger Verschleiß verringert ist. Somit ist es möglich, vergleichsweise kostengünstige Materialien für die Parkbremsen zu verwenden und eine Konstruktion der Parkbremsen zu vereinfachen, sodass Herstellungskosten reduziert sind.

Beispielsweise werden dabei beide Parkbremsen jeweils in gleicher Art und Weise angesteuert. Besonders bevorzugt jedoch wird jede Parkbremse entsprechend der Reibung zwischen dem jeweiligen Rad und dem Boden angesteuert. Mit anderen Worten ist es möglich, dass sich die Ansteuerung der beiden Parkbremsen untereinander unterscheidet. Somit ist eine Belastung der Parkbremsen weiter reduziert, wobei dennoch ein sicherer Halten des Kraftfahrzeugs nach dessen Abstellen gewährleistet ist.

Zum Beispiel erfolgt ein kontinuierliches Anpassen der Ansteuerung der Parkbremsen in Abhängigkeit der jeweiligen Reibung, sodass die Ansteuerung kontinuierlich angepasst wird. Alternativ hierzu sind beispielsweise lediglich zwei unterschiedliche Arten der Ansteuerung vorhanden, und wenn die Reibung beispielsweise einen bestimmten Wert unterschreitet, wird die eine dieser Arten verwendeten und ansonsten die andere. In einer Weiterbildung sind mehrere derartige Stufen der Ansteuerung vorhanden.

Beispielsweise erfolgt das Ansteuern der Parkbremsen in Abhängigkeit der Reibung stets oder lediglich dann, wenn bestimmte Umweltbedingungen vorliegen. Bei derartigen Umweltbedingungen ist insbesondere eine Wechselwirkung zwischen den etwaigen Bauteilen der jeweiligen Parkbremse verringert. Derartigen Umweltbedingungen sind beispielsweise eine erhöhte Luftfeuchtigkeit und/oder geringe Temperatur. In diesem Fall ist insbesondere, sofern die Parkbremsen als Scheibenbremsen ausgestaltet sind, ein Haftreibung zwischen den beiden Bauteilen reduziert, sodass die zwischen den Bauteilen wirkenden Kräfte bei einer unveränderten Ansteuerung verringert sind. Da die Ansteuerung der Parkbremsen Abhängigkeit der Reibung lediglich in derartigen Fällen, bei dem zum Beispiel die mittels einer der Parkbremsen aufgebrachte Kraft zum sicheren Halten bei einer zusätzlich verringerten Reibung zwischen dem Boden und dem zugeordneten Rad nicht ausreicht, erfolgt, ist ein Aufwand verringert wobei dennoch stets ein sicheres Halten des Kraftfahrzeugs in der jeweiligen abgestellten Position ermöglicht ist.

Besonders bevorzugt wird gemäß dem Verfahren die Spannkraft derjenigen Parkbremse erhöht, die demjenigen Rad zugeordnet ist, bei dem die höhere Reibung vorherrscht. Mit anderen Worten wird ermittelt, bei welchem der Räder die höhere Reibung vorherrscht, also bei dem der Kontakt mit dem Boden vergleichsweise ausgeprägt ist. Bei der diesem Rad zugeordneten Parkbremse wird die Spannkraft erhöht, sodass insbesondere eine zwischen den etwaigen beiden Bauteilen wirkende Kraft erhöht ist. Auf diese Weise ist dort zwar eine Belastung der Bauteile der Parkbremse erhöht. Jedoch erfolgt mittels dieser Parkbremse vorwiegend das Verhindern einer Bewegung des Kraftfahrzeugs, sodass ein sicheres Halten des Kraftfahrzeugs in der aktuellen Position gewährleistet ist.

Beispielsweise wird bei der verbleibenden Parkbremse die Spannkraft ebenfalls erhöht, sodass mittels dieser das Halten des Kraftfahrzeugs unterstützt in der aktuellen Position unterstützt wird. Bevorzugt jedoch wird bei dieser Parkbremse die Spannkraft gleichbelassen, also nicht erhöht, oder reduziert, sodass eine Belastung dieser Parkbremse verringert ist. Da aufgrund der verringerten Reibung zwischen dem dieser Parkbremse zugeordneten Rad und dem Boden das Halten des Kraftfahrzeugs lediglich geringfügig unterstützt wird, hat eine Erhöhung der Spannkraft lediglich geringe Auswirkungen auf das Halten des Kraftfahrzeugs, wohingegen der Verschleiß jedoch vergleichsweise hoch ist. Aufgrund des ggf. Verringerns der Spannkraft ist somit ein Verschleiß dieser Parkbremse verringert.

Zum Erhöhen der Spannkraft wird insbesondere die Kraft erhöht, mittels derer die etwaigen beiden Bauteile aneinander anliegen. Beispielsweise wird dabei ein Bremsdruck in einem etwaigen Hydrauliksystem der jeweiligen Parkbremsen erhöht. Beispielsweise wird hierfür ein etwaiger Druck von ca. 20 bar auf einen Wert über 22 bar erhöht, wobei der Druck zweckmäßigerweise kleiner als 90 bar, 70 bar oder 60 bar belassen wird. Insbesondere wird der Bremsdruck auf 25 bar erhöht. Vorzugsweise erfolgt eine Erhöhung des Bremsdrucks um zwischen 10 % und 80 % oder zwischen 15 % und 50 % und beispielsweise um 25 %. Sofern die Parkbremse als elektrische Parkbremse ausgestaltet ist, wird insbesondere ein Abschaltstrom erhöht, beispielsweise um zwischen 10 % oder 80 % oder um zwischen 15 % und 50 % und insbesondere um 25 %. Aufgrund derartiger Werte ist die Spannkraft erhöht, wobei dennoch eine Überbelastung der Parkbremsen im Wesentlichen ausgeschlossen ist.

Beispielsweise wird die Spannkraft stets erhöht, sofern bei einem der Räder eine erhöhte Reibung vorliegt. Da das Kraftfahrzeug in unterschiedlicher Art und Weise auf unterschiedlichen Böden abgestellt wird, ist das Rad, bei dem die höhere Reibung vorherrscht, nicht stets gleich, sodass sich das Erhöhen der Spannkraft zwischen den unterschiedlichen Parkbremsen über die Zeit aufteilt. Somit ist eine Überbelastung einer der Parkbremsen verringert, die zu einem vorzeitigen Ausfall dieser Parkbremse führen würde. Besonders bevorzugt jedoch wird die Spannkraft lediglich dann erhöht, wenn sich die beiden Reibungen um mehr als 20 % unterscheiden. Falls sich somit die beiden Reibungen um weniger als 20 % unterscheiden, erfolgt keine Erhöhung der Spannkraft. Somit wird im lediglich bei Ausnahmesituationen die Spannkraft erhöht, sodass eine Überbelastung der Parkbremsen weiter verringert ist. Vorzugsweise wird die Spannkraft lediglich dann erhöht, wenn sich die beiden Reibungen um mehr als 40 %, 50 %, 60 % oder 80 % unterscheiden, wobei dies insbesondere stets von der kleineren der Reibungen, der größeren der Reibungen oder dem Mittelwert der Reibungen aus betrachtet wird. Insbesondere werden zum Ermitteln, ob die Spannkraft erhöht wird, die beiden ermittelten Reibungen in ein Verhältnis zueinander gesetzt. Insbesondere wird, sofern zumindest eine der Reibungen geringer als ein bestimmter Grenzwert ist, eine Warnung für einen Fahrer des Kraftfahrzeugs ausgegeben, anhand derer der Fahrer auf die vergleichsweise geringe Reibung hingewiesen wird. Mittels der Warnung wird der Fahrer insbesondere aufgefordert, das Kraftfahrzeug an einem anderen Ort abzustellen, bei dem eine höhere Reibung vorherrscht.

Beispielsweise wird erst bei einem Stillstand des Kraftfahrzeugs die jeweilige Reibung ermittelt. Besonders bevorzugt jedoch wird die jeweilige Reibung zumindest teilweise noch während einer Rotation des zugeordneten Rads ermittelt, also insbesondere, wenn das Kraftfahrzeug noch bewegt wird. Vorzugsweise wird das Verfahren hierbei gestartet, wenn eine Geschwindigkeit des Kraftfahrzeugs einen bestimmten Schwellwert unterschreitet, wie beispielsweise 5 km/h. Zusammenfassend wird vor einem vollständigen Halt des Kraftfahrzeugs bereits die Reibung zwischen dem jeweiligen Rad und dem Boden ermittelt. Auf diese Weise ist das Ermitteln der Reibungen anhand mehrerer Sensoren möglich, weswegen eine Genauigkeit beim Ermitteln der Reibung erhöht ist.

Beispielsweise wird hierbei zum Ermitteln der Reibung der etwaige Antrieb des Kraftfahrzeugs entsprechend angesteuert, sodass das Rad zumindest kurzzeitig rotiert wird. Dabei wird das Rad insbesondere derart angetrieben, dass ein Radschlupf vorherrscht, anhand dessen die Reibung ermittelt wird. Dies ist beispielsweise auch beim Stillstand das Kraftfahrzeug möglich, wenn eine Bewegung des Kraftfahrzeugs zum Beispiel anhand der weitere Parkbremsen unterbunden wird. Alternativ oder in Kombination hierzu erfolgt dies bereits während der Fahrt des Kraftfahrzeugs, wenn der Antrieb beispielsweise von dem Fahrer betätigt wird, oder die Betätigung des Antriebs erfolgt aufgrund des Verfahrens, wobei im Wesentlichen keine Geschwindigkeitsänderung des Kraftfahrzeugs erfolgt. Insbesondere erfolgt die Ansteuerung des Antriebs derart, dass dies für den Fahrer des Kraftfahrzeugs nicht bemerkbar ist. Somit ist ein Komfort erhöht.

Besonders bevorzugt wird die jeweilige Reibung anhand einer Abbremsung des zugeordneten Rads ermittelt. Insbesondere wird hierfür ein etwaiges bereits vorhandenes Bremssystem des Kraftfahrzeugs ausgelesen, wobei mittels dieses Bremssystems insbesondere eine Abbremsung des Kraftfahrzeugs, also der der Räder, erfolgt. Diesem Bremssystem sind jedoch insbesondere die Parkbremsen nicht zugeordnet, oder zumindest werden diese hierfür nicht verwendet. Beispielsweise umfasst das Bremssystem mehrere Scheibenbremsen. Alternativ oder in Kombination hierzu wird die Abbremsung mittels eines Elektromotors oder Generators durchgeführt, und insbesondere wird eine Rekuperation durchgeführt.

Beispielsweise wird zum Ermitteln der Reibung mittels des etwaigen Bremssystems oder des Antriebs jedes der Räder in unterschiedliche Art und Weise abgebremst, sodass anhand des sich ergebenden Schlupfs und/oder der Drehzahl die Reibung ermittelt wird. Insbesondere werden hierbei die Räder abwechselnd abgebremst, und anhand der unterschiedlichen Reaktion wird insbesondere die jeweilige Reibung ermittelt. Zweckmäßigerweise ist dabei die Verteilung der Bremskraft derart, dass die Summe stets konstant, jedoch die den einzelnen der Räder zugeordneten Bestandteile unterschiedlich oder variabel sind, sodass für einen Fahrer des Kraftfahrzeugs die unterschiedliche Betätigung der etwaigen Bremsen des Bremssystems nicht wahrnehmbar ist. Somit wird der Fahrer nicht abgelenkt, und ein Komfort ist erhöht.

Alternativ oder in Kombination hierzu wird die jeweilige Reibung zumindest teilweise anhand eines Einschlags des zugeordneten Rads ermittelt. Mit anderen Worten wird eine Ausrichtung des jeweiligen Rads bezüglich einer etwaigen Karosserie des Kraftfahrzeugs ermittelt und hieraus zumindest teilweise die Reibung abgeleitet. Dabei ist beispielsweise zumindest eines der beiden Räder, denen eine der Parkbremsen zugeordnet sind, lenkbar ausgestaltet, sodass der Lenkeinschlag als Einschlag verändert werden kann. Vorzugsweise sind beide Räder lenkbar ausgestaltet, wobei sich insbesondere deren Sturz unterscheidet. Bei einer Veränderung des Lenkeinschlags wird eine Auflagefläche des jeweiligen Rads auf dem Boden verändert, sodass sich hieraus unterschiedliche Reibungen ergeben, auch wenn die Beschaffenheit des Untergrunds im Wesentlichen gleich ist. Die Ermittlung des Einschlags erfolgt insbesondere mittels Auslesens eines Lenksystems, mittels dessen insbesondere der Einschlag zumindest eines der Räder eingestellt wird.

Alternativ oder in Kombination hierzu wird die Reibung zumindest teilweise anhand eines Umweltparameters ermittelt. Vorzugsweise werden mehrere derartige Umweltparameter herangezogen. Dabei ist der Umweltparameter beispielsweise lediglich für eines der Räder, dem eine der Parkbremsen zugeordnet ist, oder für beide Räder gültig. Beispielsweise ist ein derartiger Umweltparameter eine Außentemperatur oder Reifentemperatur, das Vorhandensein einer Baustelle und sich daraus ergebenden Baumaterialien oder Verunreinigungen, wie Sand, auf der Boden, eine Neigung des Bodens, und/oder das Wetter oder zumindest in funktionalem Zusammenhang mit einem von diesen. Beispielsweise ist hierbei der Umweltparameter eine Anwesenheit von Eis, Schnee oder Regen und/oder gegebenenfalls die jeweilige Stärke hiervon. Zumindest ist der Umweltparameter insbesondere derart, dass anhand dessen die Bodenbeschaffenheit oder zumindest das Anhaften des Rads auf dem Boden beeinflusst oder zumindest beschrieben wird.

Beispielsweise wird der Umweltparameter mittels Funks empfangen. Das Kraftfahrzeug weist hierfür zweckmäßigerweise ein Funksystem auf, mittels dessen der Umweltparameter empfangen wird. Insbesondere wird mittels des Funksystems der Umweltparameter von einem Server oder dergleichen abgerufen, in dem der Umweltparameter hinterlegt ist. Zum Beispiel ist dabei der Umweltparameter lediglich für die aktuelle Position des Kraftfahrzeugs gültig, und zum Ermitteln des Umweltparameters wird vorzugswiese zunächst die aktuelle Position des Kraftfahrzeugs ermittelt, beispielsweise mittels eines GPS-Systems. Das Funksystem erfüllt geeigneterweise einen bestimmten Standard, wie einen WLAN-Standard oder einen Mobilfunkstandard, und wird entsprechend betrieben.

Alternativ oder in Kombination hierzu wird zumindest einer der Umweltparameter mittels eines Sensors des Kraftfahrzeugs ermittelt. Vorzugsweise wird hierfür eine Kamera herangezogen, die insbesondere auf den Boden gerichtet ist. Mittels der Kamera wird dabei vorzugsweise Boden unterhalb oder vor dem Kraftfahrzeug erfasst und hieraus der Umweltparameter und daraus die Reibung ermittelt. Beispielsweise ist die Kamera lediglich für das Durchführen des Verfahrens vorgesehen. Besonders bevorzugt jedoch ist die Kamera auch einem weiteren Assistenzsystem zugeordnet, zum Beispiel einem Spurhalteassistenten, sodass Herstellungskosten reduziert sind. Mittels der Kamera ist ein vergleichsweise genaues Erfassen des Bodens und/oder des Umweltparameters möglich, sodass anhand der Kamera die Reibung vergleichsweise genau ermittelt werden kann.

Das Kraftfahrzeug ist beispielsweise ein Nutzkraftwagen (Lkw, Bus) oder ein Personenkraftwagen. Das Kraftfahrzeug ist landgebunden und weist zumindest zwei, also zwei oder mehr Rädern auf, mittels derer ein Kontakt zu einem Boden erfolgt. Die Räder umfassen zweckmäßigerweise jeweils einen Reifen, der beispielsweise aus einem Gummi erstellt ist. Mittels des jeweiligen Reifens erfolgt insbesondere der mechanische Kontakt zu dem Boden. Jeder Reifen selbst ist zweckmäßigerweise auf eine zugeordnete Felge des jeweiligen Rads aufgezogen und umgibt diese vorzugsweise. Mittels der Felge erfolgt eine Stabilisierung des jeweiligen Reifens. Geeigneterweise weist das Kraftfahrzeug einen Antrieb und/oder ein Lenksystem auf, die mit zumindest einigen der Räder gekoppelt sind.

Das Kraftfahrzeug weist ferner zwei Parkbremsen auf, wobei die Parkbremsen unterschiedlichen Rädern zugeordnet sind. Hierbei ist es möglich, mittels jeder der Parkbremsen eine Bewegung des jeweils zugeordneten Rads zu unterbinden. Beispielsweise sind die beiden Parkbremsen zueinander baugleich, was Kosten reduziert. Alternativ hierzu unterscheiden sich diese. Vorzugsweise weisen die Parkbremsen jeweils ein erstes Bauteil auf, das rotationsfest an dem jeweils zugeordneten Rad angebunden ist, sodass dieses bei Fortbewegen des Kraftfahrzeugs und einer daraus resultierenden Rotation des Rades ebenfalls mitrotiert wird. Ferner umfasst jeder der Parkbremse zweckmäßigerweise ein zweites Bauteil, das karosserieseitig festgehalten ist, und mittels dessen eine Beeinflussung des ersten Bauteils möglich ist, sodass auf dieses eine Kraft ausgeübt wird, aufgrund derer eine Rotation des ersten Bauteils und somit des Rades unterbunden wird. Beispielsweise ist eine oder beide Parkbremsen jeweils als Scheibenbremsen ausgestaltet, wobei das erste Bauteil eine Bremsscheibe und das zweite Bauteil eine Bremsbacke ist oder zumindest umfasst. Alternativ hierzu ist beispielsweise zumindest eine der Parkbremsen als Trommelbremse ausgestaltet.

Das Kraftfahrzeug ist gemäß einem Verfahren zum Betrieb eines Kraftfahrzeugs betrieben. Gemäß dem Verfahren werden die Parkbremsen in Abhängigkeit einer Reibung zwischen dem jeweiligen Rad und dem Boden angesteuert. Das Kraftfahrzeug weist zweckmäßigerweise ein Steuergerät auf, das vorgesehen und eingerichtet ist, das Verfahren durchzuführen. Das Steuergerät ist beispielsweise ein Bestandteil eines Assistenzsystems und oder eines Bordcomputers, oder das Steuergerät ist ein separates Bauelement. Das Steuergerät weist beispielsweise einen anwendungsspezifischen Schaltkreis (ASIC) auf, der der Durchführung des Verfahrens dient. Alternativ oder in Kombination hierzu umfasst das Steuergerät einen Mikroprozessor, der insbesondere programmierbar ausgestaltet ist. Der Mikroprozessor bildet hierbei insbesondere einen Computer, und das Verfahren ist zweckmäßigerweise in einem Computerprogrammprodukt hinterlegt, das mittels des Computers durchgeführt werden kann. Die Erfindung betrifft insbesondere ein derartiges Steuergerät.

Das Computerprogrammprodukt, auch als Computerprogramm oder lediglich Programm bezeichnet, umfasst eine Anzahl an Befehle, die bei der Ausführung des Programms durch einen Computer diesen veranlassen, ein Verfahren zum Betrieb eines Kraftfahrzeugs durchzuführen, das zwei Räder aufweist, denen jeweils eine Parkbremse zugeordnet ist. Gemäß dem Verfahren werden die Parkbremsen in Abhängigkeit einer Reibung zwischen dem jeweiligen Rad und dem Boden angesteuert. Der Computer ist zweckmäßigerweise ein Bestandteil eines Steuergeräts oder Elektronik und beispielsweise mittels dieser gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das Verfahren automatisch ausführt.

Die Erfindung betrifft ferner ein Speichermedium, auf dem das Computerprogramm gespeichert ist. Ein derartiges Speichermedium ist beispielsweise eine CD-ROM, eine DVD oder eine Blu-Ray Disc. Alternativ hierzu ist das Speichermedium ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Die im Zusammenhang mit dem Verfahren erläuterten Weiterbildungen und Vorteile sind sinngemäß auch auf das Kraftfahrzeug/ das Steuergerät/ Computerprogrammprodukt/ das Speichermedium sowie untereinander zu übertragen und umgekehrt.

Nachfolgend wird ein Ausführungsbeispiel der Erfindung anhand einer Zeichnung näher erläutert. Darin zeigen:
- Fig. 1: ein Kraftfahrzeug mit zwei Parkbremsen, und
- Fig. 2: ein Verfahren zum Betrieb des Kraftfahrzeugs.

Einander entsprechende Teile sind in allen Figuren mit den gleichen Bezugszeichen versehen.

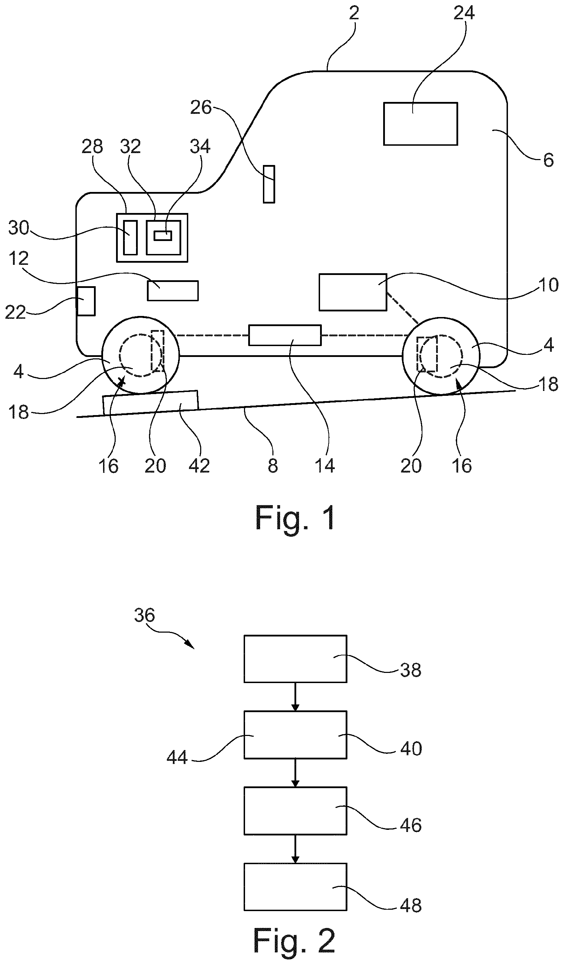

In Figur 1 ist schematisch vereinfacht ein Kraftfahrzeug 2 in Form eines Personenkraftwagens (Pkw) dargestellt. Das Kraftfahrzeug 2 weist insgesamt vier Räder 4 auf, von denen hier lediglich zwei dargestellt sind. Die Räder 4 sind mittels eines nicht näher dargestellten Fahrwerks an einer Karosserie 6 des Kraftfahrzeugs 2 angebunden. Die Räder 4, die jeweils einen Reifen und eine Felge umfassen, stehen auf einem Boden 8 auf und dienen somit dem Herstellen des Kontakts des Kraftfahrzeugs 2 zu dem Boden 8.

Das Kraftfahrzeug 2 umfasst einen Antrieb 10, der in Wirkverbindung mit zumindest einem der Räder 4 ist. Der Antrieb 10 umfasst in dieser Ausgestaltungsform lediglich einen oder mehrere Elektromotoren, sodass das Kraftfahrzeug 2 als Elektrofahrzeug ausgestaltet ist. Zudem weist das Kraftfahrzeug 2 ein Lenksystem 12 auf, mittels dessen ein Einschlag zumindest eines der Räder 4 bezüglich der Karosserie 6 verändert werden kann, sodass eine Fortbewegungsrichtung des Kraftfahrzeugs 2 verändert wird. Auch umfasst das Kraftfahrzeug 2 ein Bremssystem 14, das vier nicht näher dargestellte Scheibenbremsen aufweist. Mittels des Bremssystems 14 ist es möglich, eine Rotation der Räder 4 abzubremsen und somit das Kraftfahrzeug 2 zu einem Stillstand zu bringen.

Ferner weist das Kraftfahrzeug 2 insgesamt zwei Parkbremsen 16 auf, die separat zu dem Bremssystem 14 sind. Die beiden Parkbremsen 16 sind zueinander baugleich jedoch unterschiedlichen der Räder 4 zugeordnet. Jede der Parkbremsen 16 weist ein erstes Bauteil 18 in Form einer Bremsscheibe auf, das drehfest an dem zugeordneten Rad 4 angebunden ist. Somit wird bei einer Rotation des jeweiligen Rads 4 auch das jeweilige erste Bauteil 18 rotiert. Zudem weist jede Parkbremse 16 ein zweites Bauteil 20 auf, das mehrere nicht näher dargestellte Bremsbacken umfasst. Bei Ansteuerung der jeweiligen Parkbremse 16 wird das zweite Bauteil 20 gegen das erste Bauteil 18 gepresst, sodass ein Kraftschluss zwischen diesen erstellt ist. Mit anderen Worten werden die Bremsbacken gegen die Bremsscheibe verbracht und somit eine Rotation der Bremsscheibe verhindert. Die Parkbremsen 16 weisen einen nicht näher dargestellten Elektromotor auf, mittels derer die Bremsbacken zumindest indirekt angetrieben sind, sodass es sich bei den Parkbremsen 16 und um elektrische Parkbremsen handelt. Hierbei ist die Ausgestaltung der Parkbremsen 16 derart, dass mittels dieser im Wesentlichen ein Halten des Kraftfahrzeugs 2 in einer festen Position ermöglicht ist. Ein Abbremsen des Kraftfahrzeugs 2 aus einer Bewegung hingegen soll oder kann mittels der Parkbremsen 16 nicht erfolgen, und hierfür wird das Bremssystem 14 verwendet.

Das Kraftfahrzeug 2 umfasst mehrere Kameras 22, von denen lediglich eine dargestellt ist. Mittels der Kameras 22 wird hierbei die Umgebung des Kraftfahrzeugs 2 optisch erfasst, insbesondere auch der Boden 8. Die Kameras 22 sind dabei einem Spurhalteassistenten zugeordnet, mittels dessen bei Fortbewegen des Kraftfahrzeugs 2 Fahrbahnmarkierungen erfasst und die Position des Kraftfahrzeugs 2 bezüglich der Fahrbahnmarkierungen ermittelt wird.

Zudem weist das Kraftfahrzeug 2 ein Funksystem 24 auf, das einem Mobilfunkstandard genügt. Mittels des Funksystems 24 ist es dabei möglich, eine Funkverbindung zu einem nicht näher dargestellten Server zu erstellen und mit diesem Daten auszutauschen. Auch weist das Kraftfahrzeug 2 eine Ausgabevorrichtung 26 auf, die in einem Innenraum des Kraftfahrzeugs 2 angeordnet ist, der mittels der Karosserie 6 umgeben ist. Die Ausgabevorrichtung 26 ist ein Bildschirm.

Auch weist das Kraftfahrzeug 2 ein Steuergerät 28 auf, das einen Computer 30 in Form eines programmierbaren Mikroprozessors umfasst. Ferner umfasst das Steuergerät 28 eine Speichereinheit in Form eines Speichers 32, auf dem ein Computerprogrammprodukt 34 abgespeichert ist. Das Computerprogrammprodukt 34 umfasst mehrere Befehle, die bei der Ausführung des Programms durch den Computer 30 diesen veranlassen ein in Figur 2 dargestelltes Verfahren 36 zum Betrieb eines Kraftfahrzeugs 2 durchzuführen. Mit anderen Worten ist das Steuergerät 28 vorgesehen und eingerichtet, das Verfahren 36 durchzuführen, und das Kraftfahrzeug 2 ist gemäß dem Verfahren 36 betrieben.

Das Verfahren 36 wird gestartet, wenn eine Geschwindigkeit des Kraftfahrzeugs 2 unter 5km/h fällt. In diesem Fall wird ein erster Arbeitsschritt 38 durchgeführt. In diesem wird das Bremssystem 14 ausgelesen und anhand dessen ein Wert einer Reibung zwischen jedem der Räder 4, denen jeweils eine der Parkbremsen 16 zugeordnet ist, und dem Boden 8 zumindest vorläufig ermittelt. Auch wird ein Bremseingriff mittels des Bremssystems 14 abgeändert, sodass eines der Räder 4 zumindest zeitweise stärker abgebremst wird als das andere, wobei die insgesamt aufgebrachte Bremskraft konstant oder gleich bleibt. Dies wird abwechselnd für die beiden Räder 4 durchgeführt, und anhand der unterschiedlichen Reaktionen der Räder 4 wird die Reibung zwischen dem jeweiligen Rad 4 und dem Boden 8 weiter angepasst. Mit anderen Worten wird die Reibung zwischen jedem der Räder 4 und dem Boden 8 anhand der Abbremsung des zugeordneten Rads 4 ermittelt, während dieses noch rotiert wird, nämlich bei der Bewegung des Kraftfahrzeugs 2.

Zudem wird kurzzeitig der Antrieb 10 betätigt, sodass die damit in Wirkverbindung stehenden Räder 4 beschleunigt werden, wobei mittels einer geeigneten Ansteuerung des Bremssystem 14 eine Beschleunigung des Kraftfahrzeugs 2 selbst verhindert wird. Auch anhand der daraus resultierenden Rotation der Räder 4 wird die Reibung zwischen dem jeweiligen Rad 4 und dem Boden 8 ermittelt.

Wenn das Kraftfahrzeug 2 vollständig stillsteht, wird ein zweiter Arbeitsschritt 40 durchgeführt. In diesem wird mittels der Kameras 22 der Boden 8 optisch erfasst. In dem dargestellten Beispiel wird somit eine Eisplatte 42 erfasst, auf dem eines der Räder 4, dem eine der Parkbremsen 16 zugeordnet ist, aufsteht. Die Eisplatte 42 ist hierbei ein Umweltparameter 44, der somit in dem zweiten Arbeitsschritt 40 erfasst wird. Sofern sich auf dem Boden 8 beispielsweise Sand oder Kies befinden würde, würde diese als jeweiliger Umweltparameter 44 herangezogen. Dabei betreffen diese Umweltparameter 44 lediglich eines der Räder 4.

Zudem werden mittels des Funksystems 24 weitere Umweltparameter 44 von einem Server abgerufen, die somit mittels Funks empfangen werden. Diese Umweltparameter 44 betreffen eine Luftfeuchtigkeit sowie eine Temperatur. Somit gelten diese Umweltparameter 44 in dieser Ausführung für sämtliche Räder 4. Anhand der Umweltparameter 44 werden die bereits ermittelten Reibungen weiter angepasst, sodass die Reibungen zumindest teilweise auch anhand der Umweltparameter 44 ermittelt werden. Aufgrund der Eisplatte 42 ist eine davon verringert, wobei aufgrund von einem einsetzenden oder bevorstehenden Regen, was mittels des Funksystems 24 erfasst wurde, diese gegen 0 ("Null") tendiert.

Auch wird zur Ermittlung der Reibung ein Einschlag der Räder 4 berücksichtigt. Hierfür wird die Einstellung der Räder 4 abgerufen, die mittels des Lenksystems 12 hervorgerufen wurde. Je nach Lenkeinschlag der Räder 4 ergibt sich aufgrund des jeweiligen Sturzes eine unterschiedliche Auflagefläche auf dem Boden 8, sodass die Reibung zumindest teilweise auch anhand des Einschlags des jeweiligen Rads 4 vorgegeben ist.

In einem sich anschließenden dritten Arbeitsschritt 46 wird überprüft, ob sich die ermittelten Reibungen zwischen dem zwischen den Rädern 4 und dem Boden 8 um mehr als 20 % unterscheiden. Auch wird überprüft, ob die Reibung zwischen sämtlichen Rädern 4 und dem Boden 8 einen bestimmten festen Grenzwert unterschreitet. Falls dies der Fall ist oder sich aufgrund von sich demnächst ändernden Umweltbedingungen 44, die anhand des Funksystems 24 erfasst wurden, in naher Zukunft ändern wird, wird eine Warnung über die Ausgabevorrichtung 26 ausgegeben. Somit ist es für einen Fahrer des Kraftfahrzeugs 2 möglich, dieses an einer anderen Stelle abzustellen, an der eine höhere Reibung vorherrscht.

Falls dies nicht erfolgt, und der Fahrer beispielsweise das Kraftfahrzeug 2 verlässt und von außen verriegelt, wird ein vierter Arbeitsschritt 48 durchgeführt. In diesen werden die beiden Parkbremsen 16 betätigt und somit angesteuert. Hierbei wird die Spannkraft derjenigen Parkbremse 16 erhöht, die demjenigen Rad 4 zugeordnet ist, bei dem die höhere Reibung vorherrscht. Hierfür wird für einen Abschaltstrom, bis zu dem der Elektromotor mittels dessen die Bremsbacken betätigt sind, betrieben wird, als 25 A gewählt, wohingegen bei der verbleibenden Parkbrems 16 die Spannkraft nicht verändert wird, und als Abschaltstrom weiterhin 20 A verwendet wird. Mittels des Rads 4, bei dem die zugeordnete Parkbremse 16 mit der erhöhten Spannkraft angesteuert wird, wird eine verstärkte Haltekraft des Kraftfahrzeugs 2 auf dem Boden 8 ausgeübt, sodass die aufgrund der verringerten Reibung zwischen dem anderen Rad 4, dem die verbleibende Parkbremse 16 zugeordnet ist, und dem Boden 8 verringerte Haltekraft zumindest teilweise ausgeglichen wird. Somit ist auch bei widrigen Umständen ein Halten des Kraftfahrzeugs 2 auf dem Boden 8 ermöglicht.

Falls die ermittelten Reibungen größer als ein vorgegebener Grenzwert sind und sich nicht um mehr als 20 % unterscheiden, erfolgt die Ansteuerung der Parkbremsen 16 stets gleich, unabhängig von der tatsächlich vorhandenen Reibung. Hierbei wird das Abschaltstrom stets 20 A verwendet. Somit ist ein übermäßiger Verschleiß der Parkbremsen 16 verringert, wobei in ungünstigen Situationen dennoch ein sicheres Halten des Kraftfahrzeug 2 in der gewünschten Position gewährleistet wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise mit einander kombinierbar, ohne den Gegenstand der Erfindung zu verlassen.

### BEZUGSZEICHENLISTE:

- 2: Kraftfahrzeug
- 4: Rad
- 6: Karosserie
- 8: Boden
- 10: Antrieb
- 12: Lenksystem
- 14: Bremssystem
- 16: Parkbremse
- 18: erstes Bauteil
- 20: zweites Bauteil
- 22: Kamera
- 24: Funksystem
- 26: Ausgabevorrichtung
- 28: Steuergerät
- 30: Computer
- 32: Speicher
- 34: Computerprogrammprodukt
- 36: Verfahren
- 38: erster Arbeitsschritt
- 40: zweiter Arbeitsschritt
- 42: Eisplatte
- 44: Umweltparameter
- 46: dritter Arbeitsschritt
- 48: vierter Arbeitsschritt

## Patentansprüche

1. Verfahren (36) zum Betrieb eines Kraftfahrzeugs (2), das zwei Räder (4) aufweist, denen jeweils eine Parkbremse (16) zugeordnet ist, bei welchem die Parkbremsen (16) in Abhängigkeit einer Reibung zwischen dem jeweiligen Rad (4) und dem Boden (8) angesteuert werden.

2. Verfahren (36) nach Anspruch 1, **dadurch gekennzeichnet, dass** eine Spannkraft derjenigen Parkbremse (16) erhöht wird, die demjenigen Rad (4) zugeordnet ist, bei dem die höhere Reibung vorherrscht.

3. Verfahren (36) nach Anspruch 2, **dadurch gekennzeichnet, dass** die Spannkraft lediglich dann erhöht wird, wenn sich die beiden Reibungen um mehr als 20% unterscheiden.

4. Verfahren (36) nach einem der Ansprüche 1 bis 3, **dadurch gekennzeichnet, dass** die jeweilige Reibung zumindest teilweise während einer Rotation des zugeordneten Rads (4) ermittelt werden.

5. Verfahren (36) nach Anspruch 4, **dadurch gekennzeichnet, dass** die jeweilige Reibung anhand einer Abbremsung des zugeordneten Rads (4) ermittelt wird.

6. Verfahren (36) nach einem der Ansprüche 1 bis 5, **dadurch gekennzeichnet, dass** die jeweilige Reibung zumindest teilweise anhand eines Einschlags des zugeordneten Rads (4) ermittelt werden.

7. Verfahren (36) nach einem der Ansprüche 1 bis 6, **dadurch gekennzeichnet, dass** die Reibungen zumindest teilweise anhand eines Umweltparameters (44) ermittelt werden.

8. Verfahren (36) nach Anspruch 7, **dadurch gekennzeichnet, dass** der Umweltparameter (44) mittels Funks empfangen wird.

9. Verfahren (36) nach Anspruch 7 oder 8, **dadurch gekennzeichnet, dass** der Umweltparameter (44) mittels einer Kamera (22) ermittelt wird.

10. Kraftfahrzeugs (2), das zwei Räder (4) aufweist, denen jeweils eine Parkbremse (16) zugeordnet ist, und das gemäß einem Verfahren (36) nach einem der Ansprüche 1 bis 9 betrieben ist.
